(19) Europäisches Patentamt
European Patent Office
Office européen des brevets

(11) **EP 4 279 784 A1**

(12) **EUROPEAN PATENT APPLICATION**
published in accordance with Art. 153(4) EPC

(43) Date of publication:
**22.11.2023 Bulletin 2023/47**

(21) Application number: **22738915.2**

(22) Date of filing: **06.01.2022**

(51) International Patent Classification (IPC):
**F16L 9/21** (2006.01)     **F16L 55/033** (2006.01)

(52) Cooperative Patent Classification (CPC):
**F16L 9/21; F16L 55/033**

(86) International application number:
**PCT/CN2022/070482**

(87) International publication number:
**WO 2022/152034 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.01.2021 CN 202110044038
13.01.2021 CN 202120106744 U**

(71) Applicants:
• **Johnson Controls Air Conditioning And
Refrigeration (Wuxi) Co., Ltd.
Wuxi, Jiangsu 214000 (CN)**

• **Johnson Controls Tyco IP Holdings LLP
Milwaukee, WI 53209 (US)**

(72) Inventors:
• **YANG, Shengmei
Wuxi, Jiangsu 214000 (CN)**
• **LIN, Kun
Wuxi, Jiangsu 214000 (CN)**

(74) Representative: **Meissner Bolte Partnerschaft
mbB
Patentanwälte Rechtsanwälte
Postfach 10 26 05
86016 Augsburg (DE)**

(54) **PIPELINE PROVIDED WITH SILENCING STRUCTURE**

(57) A pipeline (180) provided with a silencing structure, the pipeline comprising a pipe (150) and a silencing structure (100). The pipe (150) has a uniform diameter. The silencing structure (100) comprises a main silencing pipe (210) and a baffle (220). The baffle (220) is disposed around the main silencing pipe (210) and is connected on the main silencing pipe (210), and the baffle (220) comprises an opposite first side and second side; the main silencing pipe (210) extends on the first side and/or the second side of the baffle (220); the main silencing pipe (210) of the silencing structure (100) is disposed in the pipe (150) and is connected to the pipe (150) by means of the baffle (220); and the baffle (220) is configured to be capable of stopping a fluid from flowing through the baffle (220) from the space between the pipe (150) and the main silencing pipe (210).

FIG. 1B

**Description**

Technical Field

The present application relates to pipelines, and more particularly to refrigerant gas pipelines with silencing structures.

Background Art

When a fluid flows through a pipe, a pressure pulsation in the fluid will not only induce the radiation noise of the pipe, but also transmit the radiation noise downstream, and the radiation noise will become a source of radiation noise of downstream equipment. In the industry, silencers are usually configured on such pipes to decrease pressure pulsation energies, so as to reduce fluid noise. Pipe reactive silencers adopted in the prior art are all configured with expansion chambers, but the arrangement of the expansion chambers is not conducive to the control over manufacturing cost, and the expansion chambers need to occupy additional space, which is not conducive to the compact layout of the pipeline.

Summary of the Invention

The present application provides a pipeline provided with a silencing structure. The pipeline comprises a pipe and a silencing structure. The pipe has a uniform diameter. The silencing structure comprises a main silencing pipe and a baffle. The baffle is disposed around the main silencing pipe and is connected on the main silencing pipe, and the baffle comprises an opposite first side and second side; the main silencing pipe extends on the first side and/or the second side of the baffle; the main silencing pipe of the silencing structure is disposed in the pipe and is connected to the pipe by means of the baffle; and the baffle is configured to be capable of stopping a fluid from flowing through the baffle from the space between the pipe and the main silencing pipe.

According to the pipeline of the present application, the baffle is annular and has an inner diameter and an outer diameter, the inner diameter is matched with an outer diameter of the main silencing pipe, and the outer diameter is greater than or equal to an inner diameter of the pipe.

According to the pipeline of the present application, the main silencing pipe extends by a first length L1 on the first side of the baffle, and extends by a second length L2 on the second side of the baffle, and the first length L1 is not equal to the second length L2.

According to the pipeline of the present application, the first length L1 is determined according to a first wavelength $\lambda 1$ in a sound to be eliminated, and a relationship between the first length L1 and the first wavelength $\lambda 1$ satisfies the following formula:

$$L1 = (0.85\text{-}1.15) \times 1/4 \times \lambda 1;$$

The second length L2 is determined according to a second wavelength $\lambda 2$ in the sound to be eliminated, and a relationship between the second length L2 and the second wavelength $\lambda 2$ satisfies the following formula:

$$L2 = (0.85\text{-}1.15) \times 1/4 \times \lambda 2.$$

According to the pipeline of the present application, an axis of the main silencing pipe is parallel to that of the pipe, and the axis of the main silencing pipe deviates from that of the pipe.

According to the pipeline of the present application, the pipeline further comprises an auxiliary silencing pipe, the auxiliary silencing pipe extends on the first side and/or the second side of the baffle, and the auxiliary silencing pipe penetrates or does not penetrate through the baffle optionally.

According to the pipeline of the present application, the auxiliary silencing pipe is arranged outside the main silencing pipe in a sleeving manner, and an inner wall of the auxiliary silencing pipe is spaced apart from an outer wall of the main silencing pipe.

According to the pipeline of the present application, a ratio of the outer diameter of the main silencing pipe to the inner diameter of the pipe is 0.5-0.9.

According to the pipeline of the present application, the pipeline comprises a plurality of silencing structures, and the plurality of silencing structures are disposed sequentially in the pipe.

According to the pipeline of the present application, no expansion part is disposed in the pipe.

According to the pipeline of the present application, the pipe comprises an air inlet section, a silencing section, and an air outlet section, the silencing structure is disposed in the silencing section, and a diameter of the air inlet section, a diameter of the silencing section and a diameter of the air outlet section are equal.

Brief Description of the Drawings

FIG. 1A is a perspective view of a first embodiment of a pipeline 180 according to the present application;

FIG. 1B is a cross-sectional view of the pipeline 180 shown in FIG. 1A that is sectioned along a line A-A in FIG. 1A;

FIG. 2 is a perspective view of a silencing structure 100 of the pipeline 180 shown in FIG. 1A;

FIG. 3 is a schematic diagram of a working principle of the pipeline 180 shown in FIG. 1A;

FIG. 4 is a perspective view of a second embodiment of a pipeline 480 according to the present application;

FIG. 5 is a perspective view of a third embodiment of a pipeline 580 according to the present application;

FIG. 6 is a perspective view of a fourth embodiment of a pipeline 680 according to the present application;

FIG. 7 is a perspective view of a fifth embodiment of a pipeline 780 according to the present application;

FIG. 8 is a perspective view of a sixth embodiment of a pipeline 880 according to the present application;

FIG. 9 is a perspective view of a seventh embodiment of a pipeline 980 according to the present application;

FIG. 10A is a perspective view of an eighth embodiment of a pipeline 1080 according to the present application; and

FIG. 10B is a cross-sectional view of the pipeline 1080 shown in FIG. 10A that is sectioned along a line A-A in FIG. 10A.

Detailed Description of Embodiments

Various specific embodiments of the present application will be described below with reference to the accompanying drawings, which constitute a part of the specification. It should be understood that although terms, such as "front", "rear", "upper", "lower", "left", "right", etc., that represent directions are used in the present application to describe various example structural parts and elements of the present application, these terms used herein are determined based on example orientations shown in the accompanying drawings for ease of illustration only. Since the embodiments disclosed in the present application may be disposed in different directions, these terms that represent directions are for illustration only and should not be regarded as limiting.

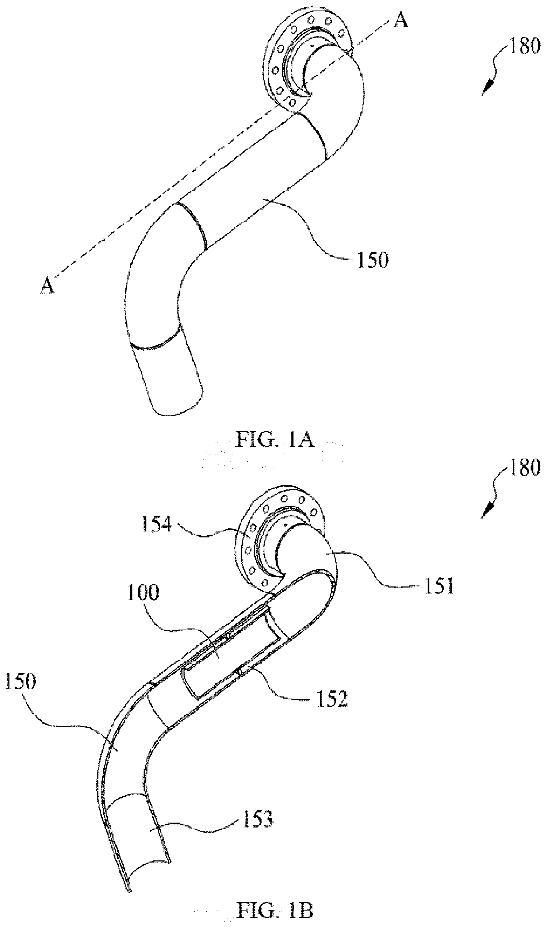

FIG. 1A is a perspective view of a first embodiment of a pipeline 180 according to the present application. FIG. 1B is a cross-sectional view of the pipeline 180 shown in FIG. 1A that is sectioned along a line A-A in FIG. 1A. As shown in FIG. 1A and FIG. 1B, the pipeline 180 comprises a pipe 150 and a silencing structure 100 disposed in the pipe 150. The pipe 150 comprises an air inlet section 151, a silencing section 152, and an air outlet section 153. Wherein the pipe 150 has a uniform diameter, that is, inner diameters and outer diameters of the air inlet section 151, the silencing section 152 and the air outlet section 153 of the pipe 150 are equal, respectively. It should be noted that uniform or equal pipe diameters referred to in the present application comprise substantially consistent or substantially equal pipe diameters.

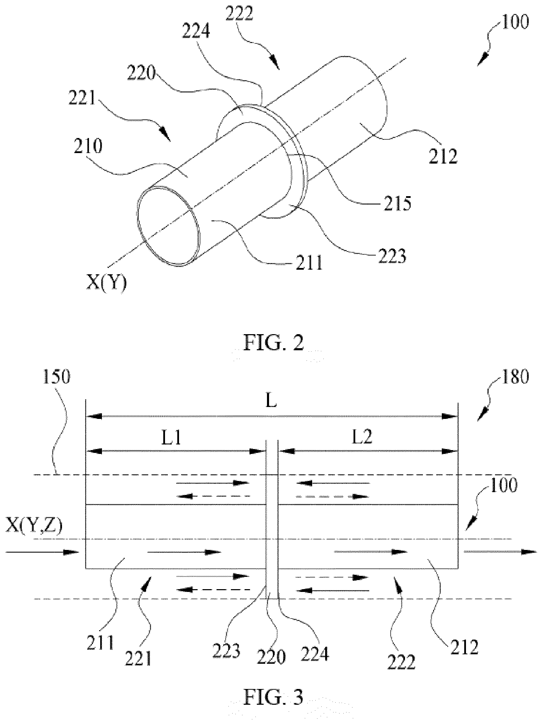

The air inlet section 151 of the pipe 150 is provided with a flange 154, the pipe 150 may be connected to an inlet flange or an outlet flange of a compressor via the flange 154, and the air outlet section 153 of the pipe 150 may also be connected to other equipment or pipes via the flange or welding and other ways. The silencing structure 100 is installed in the silencing section 152 of the pipe 150. A specific structure of the silencing structure will be elaborated in detail in FIG. 2.

FIG. 2 is a perspective view of the silencing structure 100 of the pipeline 180 shown in FIG. 1A, and used for showing the specific structure of the silencing structure 100. As shown in FIG. 2, the silencing structure 100 comprises a main silencing pipe 210 and a baffle 220 disposed around the main silencing pipe 210. The main silencing pipe 210 penetrates through the baffle 220, and the baffle 220 generally extends in a direction transverse to the main silencing pipe 210. Wherein the main silencing pipe 210 is in a shape of a circular pipe, and the baffle 220 is annular. An inner diameter of the baffle 220 is matched with an outer diameter of the main silencing pipe 210, so that no gap exists between the main silencing pipe 210 and the baffle 220 after the main silencing pipe and the baffle are assembled. As an example, the outer diameter of the main silencing pipe 210 may be slightly greater than the inner diameter of the baffle 220, so that the main silencing pipe 210 may be connected together with the baffle 220 through an interference fit manner. Of course, the main silencing pipe 210 may also be connected to the baffle 220 through other ways. For example, when both the main silencing pipe 210 and the baffle 220 are made of metal materials, the outer diameter of the main silencing pipe 210 is equal to the inner diameter of the baffle 220, so that the main silencing pipe and the baffle may be connected each other through the welding way.

An outer diameter of the baffle 220 is matched with an inner diameter of the pipe 150, so that the silencing structure 100 can be installed in the pipe 150 (shown in more detail in FIG. 1B). As an example, the outer diameter of the baffle 220 may be slightly greater than the inner diameter of the pipe 150, so that the silencing structure 100 may be connected together with the pipe 150 through an interference fit manner. Of course, the silencing structure 100 may also be connected to the pipe 150 through other ways. For example, when both the baffle 220 and the pipe 150 are made of metal materials, the outer diameter of the baffle 220 is equal to the inner diameter of the pipe 150, so that the baffle 220 may be connected to a wall face of the pipe 150 through welding connection, etc. For another example, the outer diameter of the baffle 220 is greater than the inner diameter of the pipe 150, so that the silencing structure 100 may be fixed by clamping the baffle 220 with the flange on the pipe 150.

The main silencing pipe 210 has an axis X, and the baffle 220 has an axis Y. In the present embodiment, the axis X of the main silencing pipe 210 coincides with the axis Y of the baffle 220, that is to say, the main silencing pipe 210 and the baffle 220 are coaxially arranged. In the present embodiment, with the baffle 220 as the boundary, the main silencing pipe 210 comprises two parts, namely a first main silencing section 211 located on a left side 221 (first side) of the baffle 220 and a second main silencing section 212 located on a right side 222 (second side) of the baffle 220. The first main silencing section 211 has a first length L1 (shown in more detail in FIG. 3), and the first length L1 refers to a length from a left end of the main silencing pipe 210 to a left side face 223 of the baffle 220. The second main silencing section 212 has a second length L2, and the second length L2 refers to a length from a right end of the main silencing pipe 210 to a right side face 224 of the baffle 220. In other words, the main silencing pipe 210 extends by the first length L1 on the left side 221 of the baffle 220, and extends by the second length L2 on the right side 222 of the baffle 220. In the present embodiment, the first length L1 is equal to the second length L2. In addition, the main silencing pipe 210 further comprises a connecting section 215 located in the baffle 220. The connecting section 215 is connected to the first main silencing section 211 and the second main silencing section 212, and a length of the connecting section is generally the same as a thickness of the baffle 220. A length L of the main silencing pipe 210 is a sum of the first length L1, the second length L2 and the length of the connecting section 215.

FIG. 3 is a schematic diagram of a working principle of the pipeline 180 shown in FIG. 1A, and used for showing the working principle of the pipeline 180, wherein the pipe 150 is schematically shown with dashed lines. As shown in FIG. 3, the pipe 150 and the silencing structure 100 are coaxially arranged, that is, an axis Z of the pipe 150 coincides with an axis Y of the baffle 120 and an axis X of the main silencing pipe 210. In FIG. 3, solid line arrows represent incident sound waves, and dashed line arrows represent reflected sound waves, so as to be used to represent the distribution of the incident sound waves and the reflected sound waves in the pipeline 180.

Specifically, a fluid flows from the left end to the right end of the pipe 150, and a pressure pulsation energy (sound energy) of the fluid propagates in the pipe 150. When a frequency is lower than a certain value (for example, 750 Hz), the propagation of a pressure pulsation (sound) in the pipe appears as a plane wave, that is, in the process of the axial propagation of the pressure pulsation along the pipe 150, the pressure pulsation energies distributed on the same cross section are equal at any position on the axis Z of the pipe 150. It should be noted that in FIG. 3, the fluid flows from the left end to the right end of the pipe 150, but a direction of the pressure pulsation appearing as the plane wave is parallel to the axis Z of the pipe. That is to say, part of the pressure pulsation propagates to the right parallel to the axis Z of the pipe (at this time, the pressure pulsation is consistent with the fluid in direction), and the other part of the pressure pulsation propagates to the left parallel to the axis Z of the pipe (at this time, the pressure pulsation is opposite to the fluid in direction). In order to better illustrate the principle of silencing of the pipeline 180, the solid line arrows in FIG. 3 only show part of the sound waves related to the silencing structure 100.

With continued reference to FIG. 3, the baffle 220 is capable of stopping the fluid from flowing through the baffle 220 from the space between the pipe 150 and the main silencing pipe 210. The pressure pulsation energy (incident sound wave) in this part of the fluid propagates in a direction parallel to the axis Z and hits the left side face 223 of the baffle 220. Due to the stopping of the baffle 220, the incident sound waves are reflected after hitting the left side face 223 of the baffle 220 to form reflected sound waves. The direction of the reflected sound waves is also parallel to the axis Z, but is opposite to that of the incident sound waves. In this process, a phase difference exists between the reflected sound waves and the incident sound waves, which enables the reflected sound waves to interfere with and cancel subsequent incident sound waves, thereby producing a silencing effect. However, the fluid that does not enter the space between the main silencing pipe 210 and the pipe 150 continues to flow forward through the space inside the main silencing pipe 210, and the pressure pulsation energy (sound energy) inside the fluid continues to propagate forward through the silencing structure 100 and enters the pipe 150 on the right side of the baffle 220. Part of the pressure pulsation energy (sound energy) is incident on the right side face 224 of the baffle 220 between the main silencing pipe 210 and the pipe 150, and similarly, the incident sound waves are reflected after hitting the right side face 224 of the baffle 220 to form reflected sound waves. The reflected sound waves interfere with and cancel the incident sound waves due to the phase difference between the reflected sound waves and the incident sound waves, so that another part of the sound energy will be decreased, thereby further reducing the sound energy transmitted downstream.

The first length L1 of the first main silencing section 211 and the second length L2 of the second main silencing section 212 of the main silencing pipe 210 are determined according to wavelengths λ of sounds to be silenced. As an example, a relationship between the first length L1 and the wavelength of the silenced sound and a relationship between the second length L2 and the wavelength of the silenced sound satisfy the following formulas:

$$L1 = (0.85\text{-}1.15) \times 1/4 \times \lambda1; \ L2 = (0.85\text{-}1.15) \times 1/4 \times \lambda2,$$

wherein λ1 represents the first wavelength silenced by the first main silencing section 211, and λ2 represents the second wavelength silenced by the second main silencing section 212. In other words, when the relationship between the wavelength of the sound and the first length L1 and the relationship between the wavelength of the sound and the second length L2 do not satisfy the above relationships, the sound will not be silenced by the silencing structure 100. Moreover, in the present embodiment, the first length L1 is equal to the second length L2, and the first main silencing section 211 and the second main silencing section 212 in the present embodiment are configured to silence the sounds with the same wavelength λ1. That is to say, the sound with the first wavelength λ1 produced by the fluid entering the space between the main silencing pipe 210 and the pipe 150 is silenced on the left side of the baffle 220, while the sound with the first wavelength λ1 produced by the fluid flowing through the main silencing pipe 210 is silenced on the right side of the baffle 220. The present embodiment is especially suitable for the situation where the sound to be silenced in the pipeline 180 accounts for a large proportion of the total sound.

It should be noted that the diameter of the main silencing pipe 210 has nothing to do with the wavelength of the sound to be silenced. However, the diameter of the main silencing pipe 210 will affect the pressure drop of the fluid and the amount of silencing. If the diameter of the main silencing pipe 210 is too small, the pressure drop produced when the fluid flows through the main silencing pipe 210 will be too large, resulting in obvious performance attenuation, so that a requirement for high performance of a refrigeration system cannot be met. Considering this requirement, a designer usually controls a ratio of the outer diameter of the main silencing pipe 210 to the inner diameter of the pipe 150 between 0.5-0.9 when designing the pipeline 180.

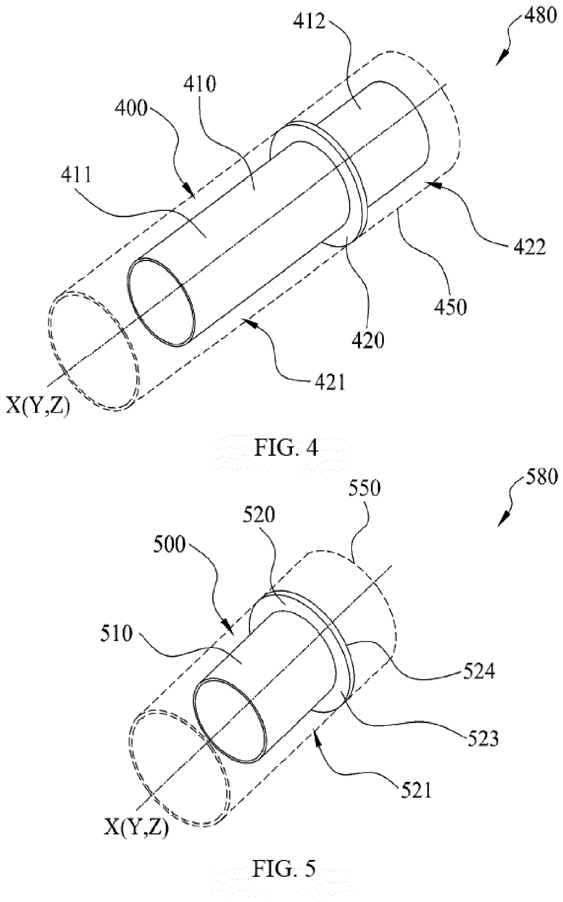

FIG. 4 to FIG. 9 are other embodiments of the pipeline according to the present application. The difference mainly lies in the silencing structure in the pipeline. For ease of illustration, FIG. 4 to FIG. 9 schematically show pipes 450, 550, 650, 750, 850, and 950 with dotted lines, and the above pipes are pipes the same as or similar to the pipe 150. A specific illustration of the silencing structure will be elaborated below.

FIG. 4 is a perspective view of a second embodiment of a pipeline 480 according to the present application. As shown in FIG. 4, the difference from the first embodiment is that a baffle 420 of a silencing structure 400 is not disposed at the middle position of a main silencing pipe 410. That is to say, a length of a first main silencing section 411 located on a left side 421 of the baffle 420 is not equal to that of a second main silencing section 412 located on a right side 422 of the baffle 420. More specifically, the length of the first main silencing section 411 is greater than that of the second main silencing section 412. The length of the first main silencing section 411 corresponds to the sound with the first wavelength, and the length of the second main silencing section 412 corresponds to the sound with the second wavelength, that is, the silencing structure 400 can silence sounds with two different wavelengths. The pipeline 480 of the present embodiment is suitable for attenuating two sounds with different wavelengths but similar specific gravity in a sound source.

FIG. 5 is a perspective view of a third embodiment of a pipeline 580 according to the present application. As shown in FIG. 5, the difference from the first embodiment is that a silencing structure 500 is not provided with a second silencing section. In the present embodiment, a baffle 520 is disposed around a right end of a main silencing pipe 510, and the right end of the main silencing pipe 510 penetrates through but does not extend out of a right side face 524 of the baffle 520. That is to say, the main silencing pipe 510 only extends on a left side 521 of the baffle 520. The silencing structure 500 can only silence a sound passing through it once, but compared with the first embodiment and the second embodiment, through the above arrangement of the baffle 520 of silencing structure 500, the baffle is fixed more conveniently to a pipe 550, thereby facilitating the installation of the silencing structure 500. In addition, the silencing structure 500 is also especially suitable for installation of elbows, tees, etc. in adjacent pipelines.

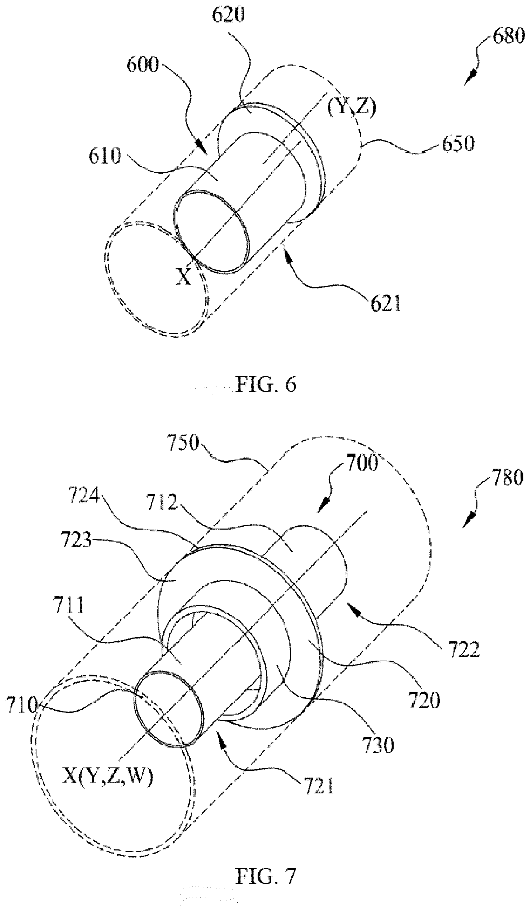

FIG. 6 is a perspective view of a fourth embodiment of a pipeline 680 according to the present application. As shown in FIG. 6, the difference from the third embodiment is that a main silencing pipe 610 is disposed eccentrically relative to a baffle 620 and a pipe 650. That is to say, an axis X of the main silencing pipe 610 does not coincide with an axis Y of the baffle 620 and an axis Z of the pipe 650. More specifically, the axis Y of the baffle 620 coincides with the axis Z of the pipe 650, and the axis X of the main silencing pipe 610 is parallel to the axis Y of the baffle 620 and the axis Z of the pipe 150, but deviates from the axis Y of the baffle 620 and the axis Z of the pipe 650 by a certain distance.

When a frequency of the sound is higher than a certain frequency, the sound does not propagate in the form of a plane wave in the pipe, and the sound distribution on each cross section is different when viewed from a radial direction of the pipe 650. The eccentric arrangement of the main silencing pipe 610 may prevent sound waves from directly passing through the main silencing pipe 610 in the form of a narrow sound beam when the sound passes through a silencing structure 600, thereby increasing an upper limit frequency of silencing. That is, less sound waves pass through the main silencing pipe 610, and more sound waves hit the baffle 620, so that more sounds can be silenced by the silencing structure 600, thereby improving the silencing effect of the pipeline 680.

FIG. 7 is a perspective view of a fifth embodiment of a pipeline 780 according to the present application. As shown in FIG. 7, the difference from the first embodiment is that a silencing structure 700 is also provided with an auxiliary silencing pipe 730. The auxiliary silencing pipe 730 is coaxial with a main silencing pipe 710 and extends on a left side 721 of a baffle 720, and an inner diameter of the auxiliary silencing pipe 730 is greater than an outer diameter of the main silencing pipe 710. In other words, the auxiliary silencing pipe 730 is arranged outside a first main silencing section 711 of the main silencing pipe 710 in a sleeving manner, and an inner wall of the auxiliary silencing pipe 730 is spaced apart from an outer wall of the first main silencing section 711. A right end of the auxiliary silencing pipe 730 does not penetrate through the baffle 720, but abuts against a left side face 723 of the baffle 720. Of course, the auxiliary silencing pipe 730 may also extend on a right side 722 of the baffle 720, but a left end of the auxiliary silencing pipe 730 does not penetrate through the baffle 720, but abuts against a right side face 724 of the baffle 720. The auxiliary silencing pipe 730 may also be provided with parts extending independently on the left side 721 and the right side 722 of the baffle 720, but is not provided with a part penetrating through the baffle 720. That is to say, the auxiliary silencing pipe 730 is composed of two sections of independent pipes, and ends of the two sections of independent pipes abut against the left side face 723 and the right side face 724 of the baffle 720 respectively, and extend away from the baffle 720.

The principle of silencing of the auxiliary silencing pipe 730 is the same as that of the main silencing pipe 710, and the length of the auxiliary silencing pipe 730 is determined according to the wavelength of an additional sound that needs to be silenced. Generally speaking, the sound to be silenced by the auxiliary silencing pipe 730 is different from that to be silenced by the main silencing pipe 710. In the present embodiment, the above arrangement of the pipeline 780 makes the pipeline possible to silence sounds with three different wavelengths, or to silence sounds with two different wavelengths. Specifically speaking, when the lengths of the first main silencing section 711, the second main silencing section 712, and the auxiliary silencing pipe 730 are not equal, the pipeline 780 can silence sounds with three different wavelengths. When the length of the first main silencing section 711 is equal to that of the second main silencing section 712 but not equal to that of the auxiliary silencing pipe 730, the pipeline 780 can silence sounds with two different wavelengths. The pipeline 780 of the present application is suitable for the situation where the space is compact and multiple sounds need to be silenced.

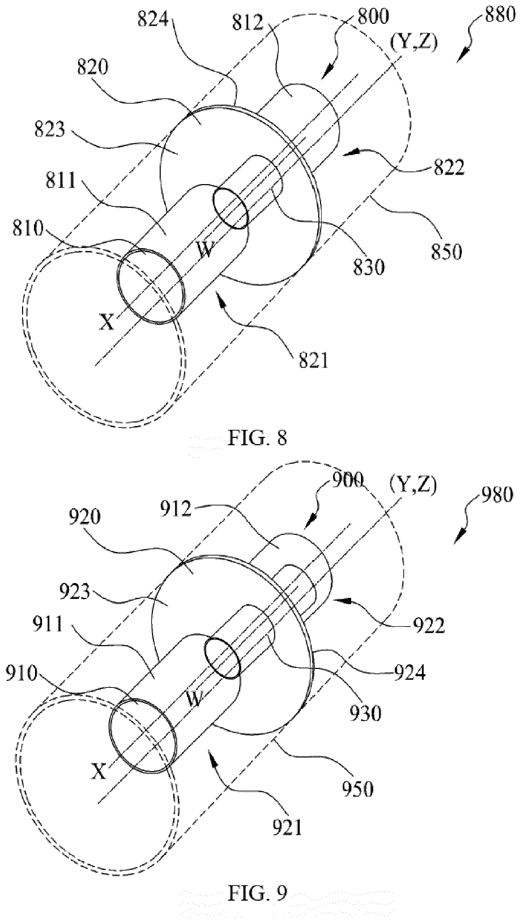

FIG. 8 is a perspective view of a sixth embodiment of a pipeline 880 according to the present application. As shown in FIG. 8, the difference from the fifth embodiment is that an auxiliary silencing pipe 830 of a silencing structure 800 is not coaxially arranged outside a main silencing pipe 810 in a sleeving manner, but is disposed on one side of the main silencing pipe 810. Specifically, the main silencing pipe 810 is disposed eccentrically on a baffle 820, which makes the baffle 820 have enough space for installing the auxiliary silencing pipe 830. An axis W of the auxiliary silencing pipe 830 is parallel to the axis X of the main silencing pipe 810, and the axis W and the axis X are mutually spaced apart by a certain distance. The auxiliary silencing pipe 830 extends on a left side 821 of the baffle 820, and a right end of the auxiliary silencing pipe 830 does not penetrate through the baffle 820, but abuts against a left side face 823 of the baffle 820. Of course, the auxiliary silencing pipe 830 may also extend on a right side 822 of the baffle 820, but a left end of the auxiliary silencing pipe 830 does not penetrate through the baffle 820, but abuts against a right side face 824 of the baffle 820. The auxiliary silencing pipe 830 may also be provided with parts extending respectively on the left side 821 and the right side 822 of the baffle 820, but is not provided with a part penetrating through the baffle 820. A ratio of an outer diameter of the auxiliary silencing pipe 830 to an inner diameter of a pipe 850 may be determined according to needs, and does not need to be controlled between 0.5-0.9. As in the fifth embodiment, the above arrangement of the pipeline 880 makes the pipeline possible to silence sounds with three different wavelengths, or to silence sounds with two different wavelengths.

FIG. 9 is a perspective view of a seventh embodiment of a pipeline 980 according to the present application. As shown in FIG. 9, the difference from the sixth embodiment is that an auxiliary silencing pipe 930 of a silencing structure 900 is disposed through the baffle 920. Specifically, an axis W of the auxiliary silencing pipe 930 is parallel to the axis X of a main silencing pipe 910, and the axis W and the axis X are mutually spaced apart by a certain distance. The baffle 920 is provided with an auxiliary silencing hole (not shown) for assembling the auxiliary silencing pipe 930, and the auxiliary silencing pipe 930 is fixedly connected to the baffle 920 via the auxiliary silencing hole, so that the baffle 920 is also disposed around the auxiliary silencing pipe 930. Of course, the auxiliary silencing pipe 930 may also extend on a left side 921 of the baffle 920, and a right end of the auxiliary silencing pipe 930 penetrates through but does not extend out of a right side face 924 of the baffle 920; or the auxiliary silencing pipe 930 may also extend on a right side 922 of the baffle 920, and a left end of the auxiliary silencing pipe 930 penetrates through but does not extend out of a left side face 923 of the baffle 920.

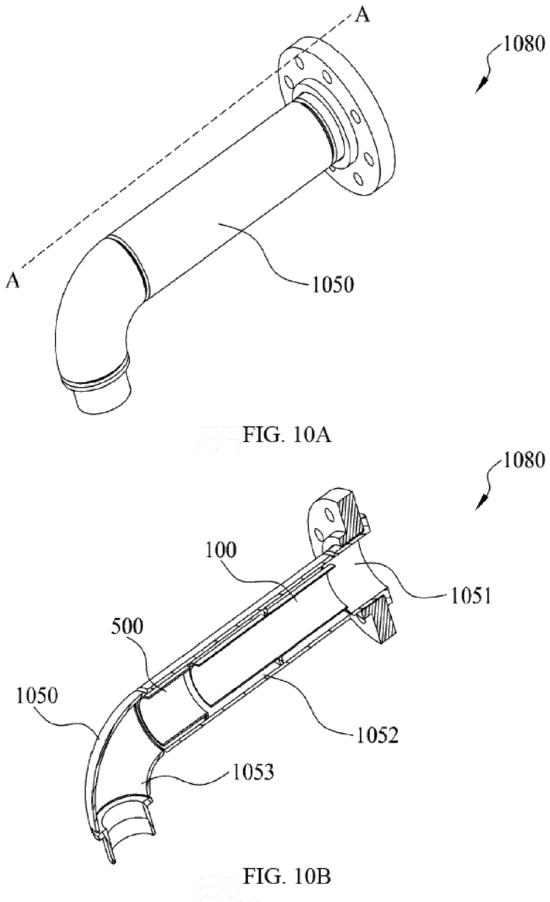

FIG. 10A is a perspective view of an eighth embodiment of a pipeline 1080 according to the present application. FIG. 10B is a cross-sectional view of the pipeline 1080 shown in FIG. 10A that is sectioned along a line A-A in FIG. 10A. As shown in FIG. 10A and FIG. 10B, the difference from FIG. 1A and FIG. 1B is that two silencing structures 100 and 500 are disposed in series between a silencing section 1052 of a pipe 1050. Specifically speaking, viewed from an axial directions of the silencing section 1052 of the pipe 1050, the silencing structures 100 and 500 are disposed sequentially in the silencing section 1052. Lengths of the silencing structures 100 and 500 are different. When a sound passes through the silencing structure 100, part of the sound with a first wavelength and/or a second wavelength may be silenced. After the sound comes out of the silencing structure 100, the sound enters the silencing structure 500, and then part of the sound with a third wavelength and/or a fourth wavelength is silenced. It can be seen that the above arrangement of the pipeline 1080 may silence sounds with various wavelengths in the sounds. Those skilled in the art should know that three or more silencing structures of the present application may also be disposed in series in the silencing section 1052 of the pipe 1050 to silence sounds with more wavelengths. Alternatively, a plurality of same silencing structures of the present application may also be disposed in series in the silencing section 1052 of the pipe 1050 to enhance the silencing degree of sound with specific wavelengths in the sounds.

In combination with the above embodiments of the present application, compared with the prior art, no expansion part with an enlarged diameter is disposed in the pipeline 180, and the silencing structure may be directly installed in the pipe to silence sounds of a fluid flowing through the pipe, without silencing the fluid flowing through the pipe by disposing the expansion part. With such an arrangement, the diameter of the entire pipeline may be generally uniform when viewed from the outside of the pipeline, and a section with a suddenly increased diameter is not needed, so that the pipeline 180 can be arranged more compactly, and at the same time, is more economical. This is especially useful for application environment of air-conditioning systems and the like, because there are a large number of pipeline components in such applications, the space for arrangement of components such as pipelines is very limited, especially the development of air-conditioning systems requires a compact structure of an entire device. In the same space, the pipeline of the present application occupies smaller space, so more other equipment may be disposed, and if no other equipment is needed, the pipeline occupying the small space will make a whole device compact. Moreover, by adopting the pipeline 180 of the present application, an existing pipeline of a device (such as an air-conditioning compressor) does not need to be modified, because an expansion part that is enlarged directly does not need to be inserted or added, and only a silencing structure needs to be embedded into the existing pipeline, so that the pipeline is used more conveniently under the condition of meeting the silencing requirements.

In addition, the pipeline of the present application may be provided with more than one silencing section (such as disposing auxiliary silencing pipes, connecting a plurality of silencing structures in series, etc.) according to the wavelength type (for example, more than two wavelengths) of the sound to be silenced, so that the pipeline may applied more widely according to the needs of usage scenarios.

Furthermore, according to the pipeline of the present application, by disposing the silencing pipe eccentrically relative to the pipe, an area where the sound waves of the fluid are more coincides with that where the sound is silenced by the baffle as much as possible, and in this way, more sounds may be blocked by the silencing structure so as to be silenced. That is to say, the silencing effect of the pipeline may be enhanced only by eccentrically disposing the silencing pipe relative to the pipe without adding additional components.

In addition, according to the present application, an inherent flange structure of the pipe (for example, the position where two sections of pipes are connected) are configured to clamp and fix the baffle 220 to install the silencing structure 100 in this way. This installation way also does not need to add additional structures on the basis of existing pipe equipment. In addition, this installation way is also conducive to the disassembly and maintenance of the silencing structure.

Although the present application will be described with reference to specific embodiments shown in the accompanying drawings, it should be understood that the pipeline of the present application may have many variations without departing from the spirit and scope and background of the teachings of the present application. Those skilled in the art will also realize that the structural details in the embodiments disclosed in the present application are changed in different ways, all of which fall within the spirit and scope of the present application and the claims.

**Claims**

1.    A pipeline provided with a silencing structure, **characterized in that** the pipeline comprises:

- a pipe having a uniform diameter; and
- a silencing structure, wherein the silencing structure comprises:

- a main silencing pipe;
- a baffle, wherein the baffle is disposed around the main silencing pipe and connected on the main silencing pipe, and the baffle comprises an opposite first side and second side,

wherein the main silencing pipe extends on the first side and/or the second side of the baffle, and

wherein the main silencing pipe of the silencing structure is disposed in the pipe and is connected to the pipe by means of the baffle, and the baffle is configured to be capable of stopping a fluid from flowing through the baffle from a space between the pipe and the main silencing pipe.

2. The pipeline according to Claim 1,
**characterized in that**
the baffle is annular and has an inner diameter and an outer diameter, the inner diameter is matched with an outer diameter of the main silencing pipe, and the outer diameter is greater than or equal to an inner diameter of the pipe.

3. The pipeline according to Claim 1,
**characterized in that**
the main silencing pipe extends by a first length L1 on the first side of the baffle, and extends by a second length L2 on the second side of the baffle, and the first length L1 is not equal to the second length L2.

4. The pipeline according to Claim 3,
**characterized in that**

wherein the first length L1 is determined according to a first wavelength $\lambda1$ in a sound to be eliminated, and a relationship between the first length L1 and the first wavelength $\lambda1$ satisfies the following formula:

$$L1=(0.85-1.15)\times1/4\times\lambda1;$$

the second length L2 is determined according to a second wavelength $\lambda2$ in the sound to be eliminated, and a relationship between the second length L2 and the second wavelength $\lambda2$ satisfies the following formula:

$$L2=(0.85-1.15)\times1/4\times\lambda2.$$

5. The pipeline according to Claim 1,
**characterized in that**
an axis of the main silencing pipe is parallel to that of the pipe, and the axis of the main silencing pipe deviates from that of the pipe.

6. The pipeline according to Claim 1,
**characterized in that**
the pipeline further comprises:

- an auxiliary silencing pipe, wherein the auxiliary silencing pipe extends on the first side and/or the second side of the baffle, and the auxiliary silencing pipe penetrates or does not penetrate through the baffle optionally.

7. The pipeline according to Claim 6,
**characterized in that**
the auxiliary silencing pipe is arranged outside the main silencing pipe in a sleeving manner, and an inner wall of the auxiliary silencing pipe is spaced apart from an outer wall of the main silencing pipe.

8. The pipeline according to Claim 1,
**characterized in that**
a ratio of the outer diameter of the main silencing pipe to the inner diameter of the pipe is 0.5-0.9.

9. The pipeline according to Claim 1,
**characterized in that**
the pipeline comprises:

   - a plurality of silencing structures, the plurality of silencing structures are disposed sequentially in the pipe.

10. The pipeline according to Claim 1,
**characterized in that**
no expansion part is disposed in the pipe.

11. The pipeline according to Claim 1,
**characterized in that**
the pipe comprises an air inlet section, a silencing section, and an air outlet section, the silencing structure is disposed in the silencing section, and a diameter of the air inlet section, a diameter of the silencing section and a diameter of the air outlet section are equal.

180

150

A

A

**FIG. 1A**

180

154

100

150

151

152

153

**FIG. 1B**

FIG. 2

FIG. 3

FIG. 4

FIG. 5

FIG. 6

FIG. 7

FIG. 8

FIG. 9

A

1080

1050

FIG. 10A

1080

100

1051

500

1050

1052

1053

FIG. 10B

## INTERNATIONAL SEARCH REPORT

| International application No. |
|---|
| **PCT/CN2022/070482** |

| A. | CLASSIFICATION OF SUBJECT MATTER |
|---|---|

F16L 9/21(2006.01)i; F16L 55/033(2006.01)i

According to International Patent Classification (IPC) or to both national classification and IPC

| B. | FIELDS SEARCHED |
|---|---|

Minimum documentation searched (classification system followed by classification symbols)

F16L; F24F

Documentation searched other than minimum documentation to the extent that such documents are included in the fields searched

Electronic data base consulted during the international search (name of data base and, where practicable, search terms used)

CNABS; VEN; CNTXT; CNKI; USTXT; WOTXT; EPTXT: 江森自控空调, 消音, 消声, 噪音, 噪声, 降噪, 降低, 减小, 隔板, 挡板, 连接板, 波长, 管, 直径, 相同, noise, voice, limit, decrease, plate, connect, chamber, same, diameter

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 214500335 U (JOHNSON CONTROLS AIR CONDITIONING AND REFRIGERATION (WUXI) CO., LTD. et al.) 26 October 2021 (2021-10-26)<br>claims 1-11 | 1-11 |
| X | CN 204459510 U (CHONGQING MAOYU GAS EQUIPMENT CO., LTD.) 08 July 2015 (2015-07-08)<br>description, paragraphs [0003]-[0018], and figure 1 | 1-3, 5-11 |
| Y | CN 204459510 U (CHONGQING MAOYU GAS EQUIPMENT CO., LTD.) 08 July 2015 (2015-07-08)<br>description, paragraphs [0003]-[0018], and figure 1 | 4 |
| X | CN 108506215 A (YORK (WUXI) AIR CONDITIONING AND REFRIGERATION EQUIPMENT CO., LTD. et al.) 07 September 2018 (2018-09-07)<br>description paragraphs [0039]-[0061], figures 1A-5B | 1-3, 5-11 |
| X | CN 109974379 A (QINGDAO HAIER CO., LTD.) 05 July 2019 (2019-07-05)<br>description, paragraphs [0030]-[0070], and figures 1-5 | 1-3, 5-11 |
| X | CN 109532389 A (BONAIRE AUTOMOTIVE ELECTRICAL SYSTEMS CO., LTD.) 29 March 2019 (2019-03-29)<br>description, paragraphs [0023]-[0036], and figures 1-4 | 1-3, 5-11 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 March 2022** | **28 March 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/070482** |

**C.     DOCUMENTS CONSIDERED TO BE RELEVANT**

| Category* | Citation of document, with indication, where appropriate, of the relevant passages | Relevant to claim No. |
|---|---|---|
| Y | CN 106352194 A (SOUTHWEST PETROLEUM UNIVERSITY) 25 January 2017 (2017-01-25) description, paragraphs [0038]-[0065], and figures 1-5 | 4 |
| A | KR 100654288 B1 (NSV CO LTD et al.) 08 December 2006 (2006-12-08) entire document | 1-11 |

Form PCT/ISA/210 (second sheet) (January 2015)

**INTERNATIONAL SEARCH REPORT**
**Information on patent family members**

International application No.

**PCT/CN2022/070482**

| Patent document cited in search report | | | Publication date (day/month/year) | Patent family member(s) | | | Publication date (day/month/year) |
|---|---|---|---|---|---|---|---|
| CN | 214500335 | U | 26 October 2021 | None | | | |
| CN | 204459510 | U | 08 July 2015 | None | | | |
| CN | 108506215 | A | 07 September 2018 | WO | 2019058350 | A1 | 28 March 2019 |
| | | | | TW | 202018189 | A | 16 May 2020 |
| CN | 109974379 | A | 05 July 2019 | WO | 2019129065 | A1 | 04 July 2019 |
| | | | | CN | 207778917 | U | 28 August 2018 |
| CN | 109532389 | A | 29 March 2019 | None | | | |
| CN | 106352194 | A | 25 January 2017 | CN | 106352194 | B | 23 February 2018 |
| KR | 100654288 | B1 | 08 December 2006 | None | | | |

Form PCT/ISA/210 (patent family annex) (January 2015)